# EUROPEAN PATENT APPLICATION

(11) **EP 2 272 653 A1**
(43) Date of publication of application: **12.01.2011**
(21) Application number: 09164821.2
(22) Date of filing: 07.07.2009
(51) Int. Cl.: B29C 67/00

(54) **Method and apparatus for layerwise production of a 3D object**

(71) Applicant: TNO Bedrijven B.V., 2628 VK Delft (NL)
(72) Inventor: Jamar, Jacobus Hubertus Theodor, 5512 BN Vessem (NL); Rijfers, Andries, 3471 CA Kamerik (NL); Maalderink, Herman Hendrikus, 5673 LD Nuenen (NL); Vaes, Mark Herman Else, 5643 TD Eindhoven (NL)
(74) Representative: Hatzmann, Martin

(57) **Abstract**

A system and a method for layerwise production of a tangible object (5), the system comprising: a construction shape (6) to form a liquid layer to he brought in contact with the tangible object; solidifying means (9) for solidifying a predetermined area of a layer (10) of the liquid (3), so as to obtain a solid layer (14) of the tangible object (5), the solid layer thus having a predetermined shape; separating means (18;19';19'') for separating said solid layer from said construction shape; moving means (18) for moving, relative to one another, the construction shape (6) to a predetermined position relative to the tangible object (5). for carrying out a successive such method cycle for solidifying a predetermined area of a successive such liquid layer; the system is arranged to provide a limited volume of liquid adhered to the construction shape to form a liquid layer of limited height that does not contact the tangible object; wherein said moving of said construction shape and said solidifying of said predetermined area are carried out to take place simultaneously.

## Description

### FIELD AND BACKGROUND OF THE INVENTION

The invention relates to a method for layerwise production of a tangible object according to the preamble of claim 1. The invention also relates to a system for layerwise production of a tangible object.

Such a method is known. For example it is known from US6547552 a small volume of liquid is pressed against a tangible object to provide a thin liquid layer than can be solidified. The flexible foil is transmittent to curing radiation. A firstly formed solid layer of the tangible object is adhered to the underside of the carrier plate by selectively solidifying the liquid. Consecutively formed solid layers are each adhered to a previously formed solid layer, respectively.

Each time after solidification of a new layer, a foil guiding stage is moved to peel off the foil from the earlier solidified layers adhered thereon in order to separate the last formed solid layer from the separation layer of the bottom plate.

A drawback of the known method is, that during each method cycle the time required for said separation and for the liquid to flow-in between the separated solid layer and the separation layer of the bottom plate is relatively long. This restricts the speed of the production process.

### SUMMARY OF THE INVENTION

It is an object of the invention to enable a faster production of a tangible object.

Therefore, according to a first aspect of the invention, a method according to claim 1 is provided.

In this method according to the first aspect of the invention, a construction shape is provided; and method cycles are repeatedly performed, each method cycle comprising the steps of:
providing a liquid layer on the construction shape;
moving, relative to one another, the construction shape to a predetermined position relative to the tangible object, for carrying out a successive such method cycle for solidifying a predetermined area of a successive such liquid layer;
solidifying a predetermined area of a layer of the liquid so as to obtain a solid layer of the tangible object, the solid layer thus having a predetermined shape; and
separating said solid layer from said construction shape;
   wherein for at least one of said method cycles, a liquid layer of limited height is provided that does not contact the tangible object; wherein said moving of said construction shape and said solidifying of said predetermined area are carried out to take place simultaneously. Favourable effects of such simultaneous movement and solidifying are elucidated as follows.

At first, the simultaneous movement and solidifying provides a speed gain of the process in itself. That is, the start of solidifying a layer does not have to wait until all parts of the layer have been provided with the liquid. Hence, there is little or no downtime of the solidifying means. Furthermore, operation is simplified and material cost can be decreased.

Furthermore, according to a second aspect of the invention, a system according to claim 6 is provided.

Specific embodiments of the invention are set forth in the dependent claims.

These and other aspects of the invention will be apparent from and elucidated with reference to the embodiments described hereinafter.

### BRIEF DESCRIPTION OF THE DRAWINGS

Further details, aspects and embodiments of the invention will be described, by way of example only, with reference to the drawings.
Fig. 1 schematically shows a sectional side view of an example of an embodiment of a system according to the invention.
Fig. 2 schematically shows a sectional side view of another example of an embodiment of a system according to the invention.
Figs. 3 -5 schematically show sectional sides of further examples of yet another embodiment of a system according to the invention.

### DETAILED DESCRIPTION

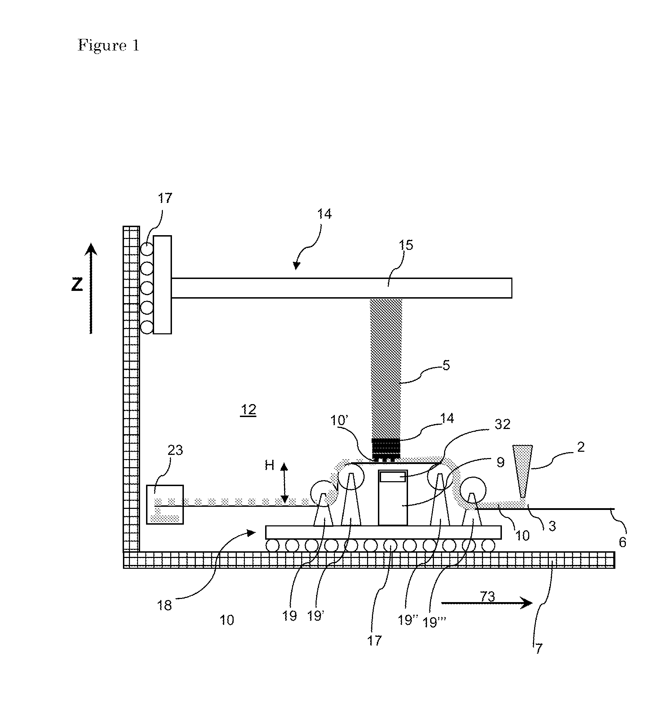

Each of the examples of Figs. 1-5 relates to a system according to claim 6 that can perform an example of a method according to claim 1. In the respective figures sometimes the same reference signs are used for similar or identical parts or aspects of the systems.

Hence, each of the examples of Figs. 1-5 relates to a system for layerwise production of a tangible object 5, the system comprising: a construction shape 6 to form a liquid layer to be brought in contact with the tangible object; solidifying means 9 for solidifying a predetermined area of a layer 10 of the liquid 3, so as to obtain a solid layer 14 of the tangible object 5, the solid layer thus having a predetermined shape; separating means 18; 19'; 19" for separating said solid layer from said construction shape; moving means 18 for moving, relative to one another, the construction shape 6 to a predetermined position relative to the tangible object 5, for carrying out a successive such method cycle for solidifying a predetermined area of a successive such liquid layer. Preferably but not necessarily the system comprises a dispenser 2 to dispense a limited volume of liquid adhered to the construction shape and adjust the volume to form a liquid layer of limited height. The liquid layer does not contact the tangible object and said dispensing of said layer and said moving of said construction shape may be carried out to take place simultaneously.

Reference is now made to Fig. 1, which shows a system 12 according to the invention.

The system 12 comprises a liquid applicator 2 which, in the shown example, is filled with a liquid 3. The system 1 further comprises a construction shape in the form of a flexible foil 6. On the foil 6, a liquid layer is formed to be brought in contact with the tangible object 5. The system 1 further comprises solidifying means 9 for solidifying a predetermined area 10 of a layer of the liquid 3, said liquid layer 10 adjoining the construction shape 6, so as to obtain a solid layer 14 of the tangible object 5, the solid layer thus having a predetermined shape.

In the shown example, the solidifying means 9 is an energy source arranged to project a pattern through the foil 6 when the liquid layer 3 contacts the tangible object 5. To enable the light or other radiation of the solidifying means 9 to solidify the liquid layer 3, the construction shape 6 (flexible foil 6) is preferably substantially transparent to the radiation.

As will be explained somewhat further below, the system 1 further comprises separating means for separating said solid layer 14 from said construction shape 6.

The system 1 further comprises moving means 18 for moving, relative to one another, the construction shape 6 to a predetermined position relative to the tangible object 5, for carrying out a successive such method cycle for solidifying a predetermined area of a successive such layer 14.

In the shown example, the moving means comprises a movable foil guiding stage 18 located below the construction shape 6.

Each time after solidification and separation of a new layer, carrier plate (z-stage) 15 together with the tangible object 5 including solidified layers adhered thereon are moved upwards. Hence, the method for layerwise production of a tangible object is a cyclic method, wherein the described steps of solidifying, separating and positioning together are comprised in a single cycle of the method.

The system is arranged in such a way, that for at least one of said method cycles, a limited volume of liquid 3 is dispensed adhered to the construction shape 6 and adjusted to form a liquid layer 10 of limited height that does not contact the tangible object. This is explained as follows.

The flexible foil 6 has a liquid contacting side for being in contact with the liquid 3. At least upper parts in Fig. 1 of the guiding means 18 are in pressing contact with a side of the flexible foil 6 opposite to the liquid contacting side. In the shown example, said pressing contact is realized by means of sliding or rolling movement of the guiding means 18 along said opposite side of the flexible foil 6. Lower parts in Fig. 1 of the guiding means 18 are in rolling contact with a support platform by means of rollers 17. Both the guiding means 18 and the solidifying means 9 are movable relative to the platform 7 via these rollers 17 in either or both directions indicated by arrow 73 in Fig. 1. The solidifying means may be movable respective to the guiding means 18.

In the shown example, the foil 6 is transparent to radiation from projector 9. As an example it is now assumed that, in the course of time during the performing of a method cycle, the guiding means 18 and the solidifying means 9 are synchronously moving in the right-hand direction of arrow 73 in Fig. 1. Then, at the instantaneous moment in time shown in Fig. 1, there are contacting parts of the layer 10 contacting the tangible object 5 for solidifying certain parts of the layer 10'. During the movement of the guiding means 18 and the solidifying means 9, these contacting parts are time-dependently varying. In Fig. 1 on the left-hand side of these contacting parts there are time-dependently varying other parts of the liquid contacting side of the flexible foil 6 which have been separated from said other, already solidified parts of the layer 10.

Movable z-stage 15 can be moved in a z-direction before a new layer of curable material is provided to the tangible object 5. With z-direction is meant the direction transverse to the layer of curable material 3 defined by foil 6. The z-stage 14 may be raised while the foil guiding foil guiding stage 18 is not moving. In this embodiment, rolling elements 17 enable movement of the z-stage 15. Tangible object 5 is connected to the z-stage 15 and in each method cycle a new layer is stacked from below. For sake of clarity, the layer of curable material is shown with an exaggerated thickness.

The apparatus 12 comprises a guiding means in the form of a foil guiding stage 18, for providing a layer of curable material to the tangible object 5. The apparatus 12 further comprises removing means for removing the uncured material from the layer outside the intersection pattern. In the embodiment of FIG. 1, the foil guiding stage 18 is arranged for both dispensing a layer of curable material to the foil; illuminating the layer to solidify a further patterned layer to the tangible object 5 and for removing the uncured material from the layer outside the pattern. As an alternative, removing the uncured material from the layer outside the intersection pattern may be performed by e.g. removing the uncured material with a blower. This is especially suitable when the uncured material has a dry, powder like structure or is a low viscosity liquid.

The foil guiding stage 18 is movable transverse to the z-direction. The movement of the foil guiding stage 18 is enabled by rolling elements 17. Other ways of moving, like sliding are also possible. The foil guiding stage 18 further comprises foil guiding elements 19, 19', 19" and 19"' protruding from the stage 18 for guiding a foil 6 along the tangible object 5 so as to apply a layer of curable material to the tangible object 5. In illustrated embodiment, the foil guiding elements 19 comprise rollers. The foil guiding stage 18 is reciprocable. Two foil guiding elements (19) arranged on the stage 18 define a contact height contacting the tangible object 5 and at least one position distanced from the contact height, for guiding the foil 6 to or from the contact height to contact the tangible object 5 by movement along the tangible object 5 while having opposite ends fixed relative to the tangible object 5 at least during contacting.

The foil 6 is arranged for carrying the curable layer material 10 supplied from a dispenser 2 to the tangible object 5 and for carrying the removed uncured material away from the tangible object 5, possibly to a residue reservoir 23. Typically, the uncured material outside the intersection pattern sticks to the moving foil 6 because the adhesive force between the uncured material and the foil 6 are larger than the adhesive force between the uncured material and the tangible object 5.

The foil 6 and the foil guiding stage 18 may be moved independently. In one operating mode, in a first step, the foil 6 is moved so as to provide a layer of curable material beneath the tangible object 5. The curable material is, at that time, not yet in contact with the tangible object 5. In a second step, the foil guiding stage 18 moves along the tangible object 5 to apply the layer of curable material to the tangible object 5, expose the curable material and remove the uncured material. In the second step, the foil 6 does not substantially move relative to the tangible object 5 transverse to the z-direction.

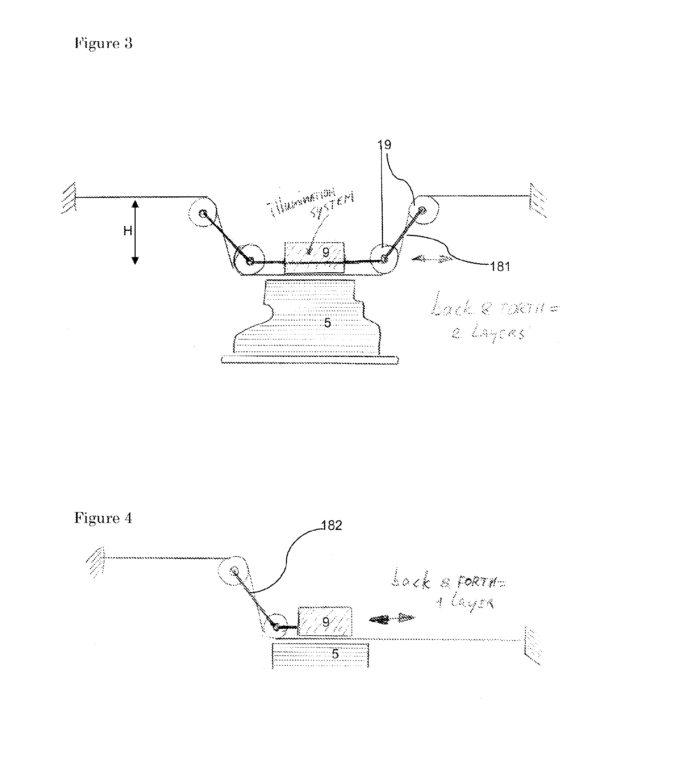

The apparatus 12 comprises an energy source 9 arranged for at least partially curing at least part of an intersection pattern in the layer of curable material 3. In the embodiment of FIG. 4 the energy source 9 comprises a plurality of individually operable LED's arranged in rows and columns (not shown). The energy source 9 may be moveably disposed below the layer of curable material 3, such that it can move in a direction 8 parallel to the layer of curable material 3. The motion of the energy source 9 may be controlled by a controller, which also controls the lighting of the LEDs. In use, the energy source 9 may be moved rectilinearly in a direction that extends at an angle with the directions of the rows and columns of the LED array 32 to enhance the effective resolution of the system. This technique is described in more detail in copending application EP 07150447.6 in the name of applicant, which is incorporated herein by reference for further information regarding this aspect. The energy source 9 is positioned on the movable foil guiding stage 18, between the protruding foil guiding elements 19 so as to expose the layer of uncured material through the foil 6. The energy source may be covered by a transparent plate, e.g. a glass plate to improve the guidance of the foil 6.

The combination of using a LED light source comprising a plurality of individually operable LED's and partially curing at least part of the intersection pattern may be advantageous. Before explaining this further, the LED light source as used in this embodiment will be described in some detail.

The LED light source may comprise a two dimensional matrix of typically 80 x 120 light emitting diodes (LED's); that are image via a multilens array (not shown) to the layer of curable material 3. The length of the matrix is typically 60 centimetres. The LED's are individually operable to write the intersection pattern with a control speed of an individual LED typically in the order of nanoseconds, by a plurality of electrical pathways, selectively connected to the respective LEDs. In this example, accordingly, the energy source 9 is provided by a two-dimensional array of LEDs extending in a plane parallel to the layer of curable material 3, and in between the multi-lens-array and the substrate.

When the method of the present invention is not used, in other words, when the complete intersection pattern is fully cured, the LED light source typically moves over the layer of uncured material with a scanning speed of 10 centimeters per second.

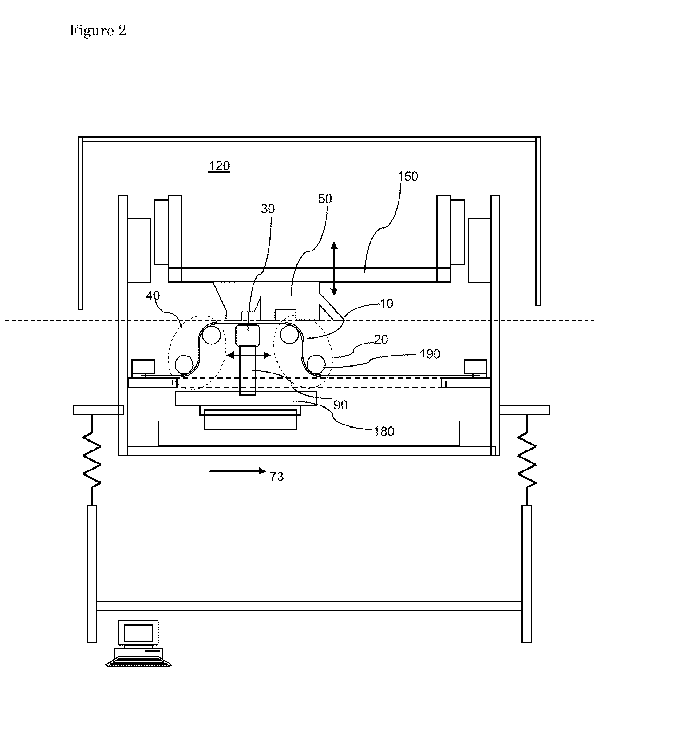

Figure 2 shows a further detailed embodiment wherein the subprocesses 'layer provision' 20 and 'solidifying' 30 are carried out simultaneously. In addition, the separating step 40 is also carried out in the same operational movement of foil guiding stage 180. It is noted that the subsystems layer provision and layer removal will be interchanged when reversing movement of stage 180; in Figure 2, the movement is from left to right (arrow 73).

The solidifying means, in the example formed by 'exposure unit' 90 for carrying out the solidification has a dimension that is limited in the direction of the foil guiding stage 180, since in this direction, by scanning movement, a full length dimension of the tangible object 5 can be built. The simultaneity of the layer provision 20 and solidifying 30 processes can be used to achieve an additional gain in required process time.

As an additional advantage, in contrast to sequential operation, the layer provision 20 and exposure unit 30 used for carrying out said subprocesses can be are used more efficiently (close to 100% of the time). In addition, since all of the machine parts for separate process steps can be dimensioned relatively small, high process speed can be provided which diminishes process time for all sub processes.

The figure illustrates a machine in which the product is built by adding layers successively to the underside of the product 50 which is attached to the 'product holder' 150.
- Consider a 'working area' which should be large enough to accommodate the product 50 to be made. The present invention is especially useful when the working area is relatively large, e.g. 50 x 50 cm2.

In figure 2 therefore the 'product holder' 150 defines a working area of at least 50 cm long (from left to right in the figure) and 50 cm wide (perpendicular to the plane of the drawing).
- For each layer 2 process steps are always required (1) providing (20) a layer of resin 10, exposure (30) of the resin 10; in many applications there is also releasing (40) the unexposed resin 10 from the building surface ('peeling' in the example of the drawing).
- Conventionally these processes are carried out on the whole working area.

In one aspect of the invention, the processes may be performed on only a small part of the working area at a time. So process equipment (e.g. exposure unit) is required that can address a part of the working area at any instant of time.

Thus, while figure 2 illustrates a single foil guiding stage 180 covering at least one length dimension of the working area, a multi stage arrangement can be provided where the processes are carried out in parallel, simultaneously on different parts of the working area. This may considerably reduce a total process time:
- Each of the 3 processes requires a process time TP(i), i=1..3 that is determined by:
   ○ the net process time TP(i): e.g. the required exposure time (e.g. lower light output results in a longer exposure time) or the speed at which the process can be carried out: movement [m/s] from left to right. This in turn is determined by properties of e.g. the resin and the product (e.g. the product can only withstand small forces resulting in lower movement speed).
   ○ the lead in and lead out time. In the example of the Figure 2 arrangement, wherein a moving process is depicted by moving a reciprocable guide stage 18, as opposed to stationary process equipment, the distance to be travelled is the length of the working area + the length of the guide stage LPE(i) resulting in an additional process time T PE(i) = LPE(i) / v (where v is the travelling speed).
   ○ so the total time for one layer will be:
      conventionally for stationary systems: TP1 + TP2 + TP3.
with the moving stage: max (TP1, TP2, TP3) + TPE1 + TPE2 + TPE3.

It follows that the advantage is biggest when TP1, TP2 and TP3 are comparable, and when the process equipment can be made small compared to the working area. For large working area, an arrangement comprising a moving foil guiding stage thus may provide process time reduction.

To shorten the length direction of the stage, an exposure unit 6 is typically limited in length, for example, for working areas of 50 cm, only 6 cm length can be realised with elements ('pixels', each having a LED+microlens) of 2 x 2 mm2, and still provide a high resolution of 15 pixels per mm of working-area-width.

In addition, the coater 20 and peeler 40 mechanisms are preferably limited in length, also typically a few cm. For the coater rollers preferably knurled rollers 190 are used as an example of a profiled applicator for flattening and adjusting the layer volume provided from the dispenser. A carefully designed profile allows the liquid to evenly spread to the foil by urging the profile to the foil and allowing the liquid in the recesses of the profile and thus form a layer of uniform height. The system 120 is provided with vibration damping and a protective cap. A controller is arranged to control the method steps carried out by the system 120.

Figure 3 shows a schematic example wherein a schematically foil guiding carriage 181 is shown. The foil guiding stage comprises at least two foil guiding elements 19 arranged thereon defining a contact height H and at least one position distanced from the contact height, for guiding the foil 6 to or from the contact height to contact the tangible object 5 by movement along the tangible object 5 while having opposite ends fixed relative to the tangible object at least during contacting. The stage is operative in both directions to be used either as a coater or as a peeler, so the machine can be operated with a bidirectional movement; moving back the complete mechanism from the end-of-scan position to the start-of-scan position is not needed. Accordingly, two layers can be produced in a cycle where the carriage returns to its initial position.

Figure 4 shows an alternative embodiment, wherein carriage 182 is operated in a unidirectional way: Here a back and forth movement results in the production of a single layer.

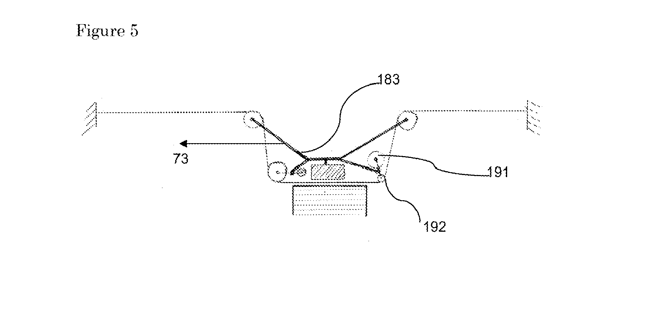

Figure 5 shows a foil guiding stage arrangement 183 wherein the foil guiding elements comprise a separator guide 192 and an applicator guide 191, the separator guide 192 having a smaller bending radius than the applicator guide. The operating movement is indicated by arrow 73. Preferably, in bidirectional mode, this system comprises a changing system to change the separator guide 192 and the applicator guide 191 relative to the guiding stage direction 73.

In the above it is shown that the method 1 of the present invention may lead to a speed increase. On top of that, the raster patterns may be further optimized for improving the on and off duty sequence of the individual LED's of the LED light source. This may further improve the output power of the LED's and the building speed.

The detailed drawings, specific examples and particular formulations given serve the purpose of illustration only. The apparatus 12 described, is configured to build the tangible object 5 upside down. It is however also possible to use the method 1 according to the present invention with apparatuses for conventional RP and RM techniques like Selective Laser Sintering (SLS) and Stereo Lithography (SLA).

In the foregoing specification, the invention has been described with reference to specific examples of embodiments of the invention. It will, however, be evident that various modifications and changes may be made therein without departing from the broader spirit and scope of the invention as set forth in the appended claims. Furthermore, the object may have any suitable size and shape. Also, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while functionally operating as a single device. Also, devices functionally forming separate devices may be integrated in a single physical device. However, other modifications, variations and alternatives are also possible. The specifications and drawings are, accordingly, to be regarded in an illustrative rather than in a restrictive sense. While certain embodiments detail certain optional features as further aspects of the invention, the description is meant to encompass and specifically disclose all combinations of these features unless specifically indicated otherwise or physically impossible.

While the embodiments detail construction shapes in the form of a flexible foil, other construction shapes are possible without departing from the scope of the invention, in particular, rigid shapes, such as drums, planar shapes etc. Furthermore, while the moving means are typically provided as a carriage 18, 180, 181, 182, 183, other systems, in particular, drum actuating designs may provide movement of the construction shape to the tangible object.

In the claims, any reference signs placed between parentheses shall not be construed as limiting the claim. The word 'comprising' does not exclude the presence of other elements or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A method for layerwise production of a tangible object (5), the method comprising:
- providing a construction shape (6); and
- repeatedly performing method cycles, each method cycle comprising the steps of:
- providing a liquid layer on the construction shape;
- moving, relative to one another, the construction shape to a predetermined position relative to the tangible object, for carrying out a successive such method cycle for solidifying a predetermined area of a successive such liquid layer;
- solidifying a predetermined area of a layer (10) of the liquid (3), so as to obtain a solid layer (14) of the tangible object (5), the solid layer thus having a predetermined shape;
- separating said solid layer from said construction shape;
wherein for at least one of said method cycles, a liquid layer of limited height is provided that does not contact the tangible object; wherein said moving of said construction shape and said solidifying of said predetermined area are carried out to take place simultaneously.

2. A method according to claim 1, wherein, in addition, said layer provision and said solidifying are carried out such that solidifying of certain parts of the layer (14) takes place simultaneously with provision of the liquid layer on the construction shape.

3. A method according to claim 1, wherein the construction shape comprises a flexible foil (6) that is brought in contact with the liquid (3) from a liquid applicator (2) and the flexible foil is bent such that time-dependently varying contacting parts of the liquid contacting side of the flexible foil (6) are in contact with the tangible object for solidifying said certain parts of the layer (10).

4. A method according to claim 3, wherein guiding means (18) are brought in pressing contact with the side of the flexible foil (6) opposite to the liquid contacting side for defining the time-dependently varying contacting parts of the liquid contacting side of the flexible foil.

5. A method according to claim 4, wherein said pressing contact is realized by means of sliding of the guiding means (18) along the flexible foil (6) having opposite ends fixed relative to the tangible object.

6. A system for layerwise production of a tangible object 5, the system comprising:
a construction shape (6) to form a liquid layer to be brought in contact with the tangible object;
solidifying means (9) for solidifying a predetermined area of a layer (10) of the liquid (3), so as to obtain a solid layer 14 of the tangible object 5, the solid layer thus having a predetermined shape;
separating means (18; 19'; 19") for separating said solid layer from said construction shape;
moving means (18) for moving, relative to one another, the construction shape to a predetermined position relative to the tangible object, for solidifying a predetermined area of a successive such liquid layer; **characterized in that**
the system is arranged to provide a limited volume of liquid adhered to the construction shape to form a liquid layer of limited height that does not contact the tangible object; wherein said moving of said construction shape and said solidifying of said predetermined area are carried out to take place simultaneously.

7. A system according to claim 6, wherein the system is further arranged to carry out said layer provision and said solidifying such that solidifying of certain parts of the layer (14) takes place simultaneously with provision of the liquid layer on the construction shape.

8. A system according to claim 6, wherein the construction shape comprises a flexible foil (6) that is brought in contact with the liquid (3) from the liquid applicator (2) and the flexible foil is bent such that time-dependently varying contacting parts of the liquid contacting side of the flexible foil (6) are in contact with the tangible object for solidifying said certain parts of the layer (10).

9. A system according to claim 6, wherein the construction shape (6) comprises guiding means (18) and wherein the guiding means are brought in pressing contact with the side of the flexible foil (6) opposite to the liquid contacting side for defining the time-dependently varying contacting parts of the liquid contacting side of the flexible foil.

10. The system according to claim 9, wherein the guiding means (18) comprises a reciprocable foil guiding stage comprising at least two foil guiding elements (19) arranged thereon defining a contact height H and at least one position distanced from the contact height, for guiding the foil (6) to or from the contact height to contact the tangible object (5) by movement along the tangible object (5) while having opposite ends fixed relative to the tangible object at least during contacting.

11. The system according to claim 10, wherein the reciprocable foil guiding stage further comprises an applicator system for flattening and adjusting the layer volume.

12. The system according to claim 11, wherein the applicator system comprises a profiled applicator.

13. The system according to claim 10, wherein the foil guiding elements comprise a separator guide and an applicator guide, the separator guide having a smaller bending radius than the applicator guide.

14. The system according to claim 13, further comprising a changing system to change the separator guide and the applicator guide relative to the guiding stage direction.

15. The system according to claim 6, further comprising: a stage (14) arranged for holding the tangible object (5), the stage being a movable z-stage (15) for moving the tangible object (5) in a z-direction before providing the layer of curable material (3).
